**Europäisches Patentamt**

(19) **European Patent Office**

**Office européen des brevets**

(11) Numéro de publication: **0 069 652**
**B1**

(12) # FASCICULE DE BREVET EUROPEEN

(45) Date de publication du fascicule du brevet:
11.09.85

(51) Int. Cl.⁴: **G 03 H 1/26**, G 11 C 13/04

(21) Numéro de dépôt: **82401206.6**

(22) Date de dépôt: **29.06.82**

(54) **Procédé holographique d'enregistrement-lecture.**

(30) Priorité: **07.07.81 FR 8113322**

(43) Date de publication de la demande:
**12.01.83 Bulletin 83/2**

(45) Mention de la délivrance du brevet:
**11.09.85 Bulletin 85/37**

(84) Etats contractants désignés:
**DE GB NL SE**

(56) Documents cités:
**CH - A - 446 441**
**US - A - 3 519 323**
**US - A - 3 603 668**
**US - A - 3 617 274**
**US - A - 3 754 808**

**OPTICS COMMUNICATIONS, vol.31, no.3, décembre 1979, Amsterdam (NL), M.P. PETROV et al.: "Light diffraction and nonlinear image processing in electroopticBi2Si020 crystals", pages 301-305**
**JOURNAL OF THE OPTICAL SOCIETY OF AMERICA, vol.65, no.6, juin 1975, New York (US), S.K. CASE: "Coupled-wave theory for multiply exposed thick holographic gratings", pages 724-729**
**APPLIED PHYSICS LETTERS, vol.29, no.9, 1er novembre 1976, American Institute of Physics, New York (US), J.P.**

(73) Titulaire: **THOMSON-CSF, 173, Boulevard Haussmann, F-75379 Paris Cedex 08 (FR)**

(72) Inventeur: **Huignard, Jean-Pierre, THOMSON-CSF SCPI 173, bld Haussmann, F-75379 Paris Cedex 08 (FR)**
Inventeur: **Arditty, Hervé, THOMSON-CSF SCPI 173, bld Haussmann, F-75379 Paris Cedex 08 (FR)**

(74) Mandataire: **Lepercque, Jean et al, THOMSON-CSF SCPI 173, Bld Haussmann, F-75379 Paris Cedex 08 (FR)**

(56) Documents cités: (suite)
**HUIGNARD et al.: "High-sensitivity read-write volume holographic storage in Bi2Si020 and Bi2Ge020 crystals", pages 591-593**

BUNDESDRUCKEREI BERLIN

## Description

L'invention se rapporte à un procédé holographique d'enregistrement-lecture.

Dans les dispositifs d'enregistrement-lecture holographiques connus l'hologramme d'un objet est enregistré à partir d'une onde objet diffractée par l'objet dont on souhaite enregistrer l'hologramme et d'une onde de référence correspondante. On dipose, actuellement, de matériaux permettant l'inscription des réseaux ou hologrammes de phase à efficacité de diffraction élevée, telle la gelatine bicromatée, ou fonctionnant en temps réele tels cristaux électro-optiques tel l'oxyde de bismuth-silicium. Ces matériaux sont »épais« par rapport au pas moyen des strates photoinduites, et leur comportement à l'inscription et à la lecture est décrit par le formalisme des ondes couplées; notamment l'effet Bragg de sélectivité angulaire peut y être utilisé.

La lecture des hologrammes s'effectue par éclairage au moyen d'un rayonnement optique cohérent, par exemple au moyen du faisceau de référence qui a été utilicsé à l'enregistrement. Pour que cette lecture n'entraine pas l'effacement de l'hologramme inscrit, il est nécessaire que la variation spatiale d'indice précédemment induite ne soit pas sensiblement modifiée par un tel rayonnemènt.

Si l'onde objet est complexe et contient donc un ensemble de vecteurs d'ondes non colinéaires, il résulte dans le support photosensible un spectre de vecteurs résultants de longueurs et d'orientations différentes. Dans le domaine de l'art connu il n'est pas possible alors de diffracter une image dans les conditions optima si la longueur d'onde de lecture est différente de celle utilisée pour l'inscription holographique dans le matériau épais. Il s'agit là d'une limitation importante. En effet pour une information enregistrée par effet photoréfractif dans les cristaux électro-optiques de type oxyde de bismuth-silicium (BSO), la relecture à la même longueur d'onde efface l'information par relaxation du champ de charge d'espace.

Si l'on a affaire à une lecture non destructive, il peut être intéressant de lire avec un rayonnement visible un enregistrement effectué avec des longueurs d'ondes plus faibles. Ainsi les composants optiques sur gélatine bicromatée ou blanchie ont un domaine spectral limité qui va de 0,23 micromètres à 0,58 micromètres environ, ce qui limite considérablement leur utilisation. La méthode d'enregistrement proposée dans la présente invention assure une relecture, dans les conditions de Bragg par une longueur d'onde prise en dehors du domaine de sensibilité spectrale des cristaux de type oxyde de bismuth-silicium (BSO) par exemple.

Un document de l'art antérieur, à savoir le document »Optics Communications« 31 (1979), pages 301—305 décrit un procédé holographique d'enregistrement-lecture par strates d'indice dans le domaine d'un milieu de stockage photoexcitable. Il consiste à faire interférer dans ledit volume un faisceau issu d'un objet et un faisceau de référence au cours de l'inscription, chacun de ces deux faisceaux comprenant deux rayonnements inscripteurs de longueurs d'ondes distinctes.

Ce procédé connu utilise une longueur d'onde d'écriture $\lambda_1$ et dans le milieu de stockage un réseau de strates auquel correspondent deux vecteurs d'onde $K_1$, $K_2$; et une longueur d'onde de lecture $\lambda_2$ avec un vecteur d'onde K, correspondant à cette longueur d'onde, tel que $K\pm = K_1 \pm K_2$. Ce document de l'art connu décrit donc la lecture, par un rayonnement cohérent ayant pour vecteur d'onde dans le milieu de stockage une combinaison linéaire des vecteurs d'onde du rayonnement inscripteur se propageant selon deux incidences différentes.

Par contre, dans le procédé de l'invention, il y a écriture à deux longueurs d'ondes $\lambda_1$ et $\lambda_1'$ sous une même incidence et lecture sous une incidence différente et à une troisième longueur d'onde $\lambda_L$.

Le procédé de l'invention, par rapport au procédé tel que décrit dans le document de l'art connu, présente donc l'avantage de supprimer le problème de positionnement du faisceau d'inscription de longueur d'onde $\lambda_1$ pour atteindre le milieu sous deux incidences $\Theta_1$ et $\Theta_2$. Dans le procédé de l'invention, cette incidence reste constante, seule la longueur d'onde du faisceau inscription doit être changée.

L'invention a pour objet un procédé holographique d'enregistrement-lecture par strates d'indice dans le volume d'un milieu de stockage photoexcitable nonlinéaire, faisant interférer dans ledit volume un faisceau issu d'un objet et un faisceau de référence, de manière à entrainer l'apparition dans ledit milieu d'un réseau de strates auquel correspondent deux vecteurs d'onde d'inscription distincts, la lecture dudit milieu étant assuré par une source produisant un rayonnement cohérent à une longueur d'onde de lecture différente de la longueur d'onde des faisceaux d'inscription et le vecteur d'onde dans ledit milieu étant une combinaison linéaire de ces vecteurs d'onde d'inscription, caractérisé en ce que ledit procédé consiste à faire interférer, au cours de deux étapes d'inscription successives, les faisceaux de référence et objet de deux rayonnements inscripteurs de longueurs d'ondes d'inscription distinctes produits par deux sources de rayonnement cohérent et projetés, au cours des deux étapes selon les mêmes trajets, en direction dudit objet et en direction dudit milieu.

Les caractéristiques et avantages de l'invention seront expliqués dans la description ci-après, en référence aux figures annexées où:

— les figures 1, 2 et 3 sont des figures explicatives du fonctionnement d'un dispositif de l'art connu;
— les figures 4, 5 et 6 sont des figures explicatives du procédé selon l'invention;
— la figure 7 illustre le procédé selon l'invention.

Pour l'ensemble de la description qui va suivre et pour les figures considérées on se place à l'intérieur du milieu 1. C'est à dire que l'on peut écrire $\frac{2\pi n}{\lambda} = K$ où n est l'indice du milieu à la longueur d'onde $\lambda$ et K le vecteur d'onde du rayonnement considéré.

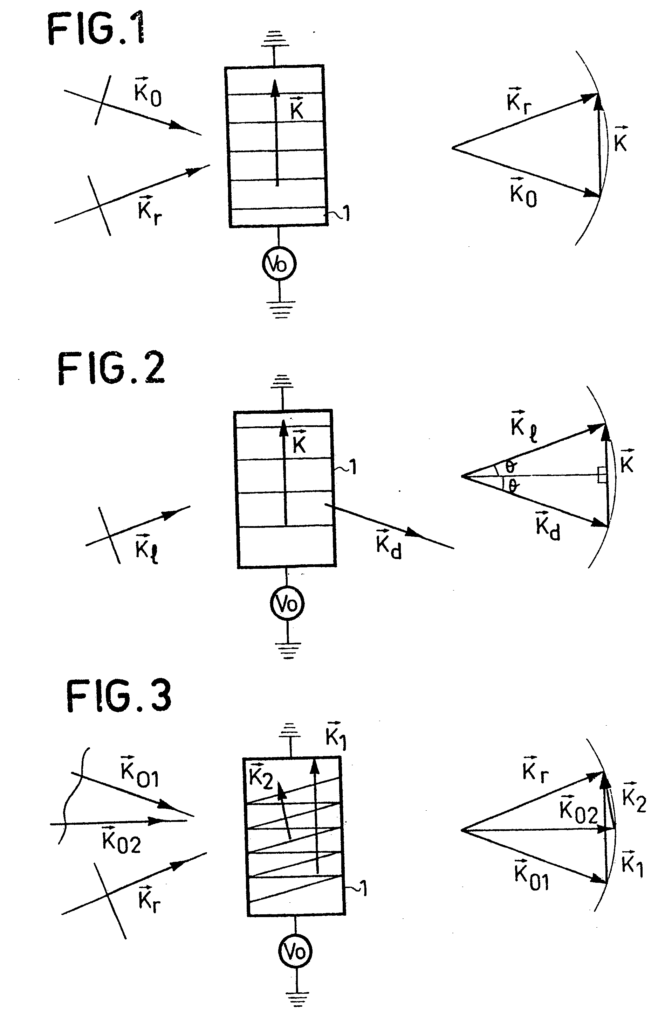

Sur la figure 1 on considère deux faisceaux. Un faisceau modulé par un objet linéairement transparent de vecteur d'onde $\vec{K_o}$ et un faisceau référence de vecteur d'onde $\vec{K_r}$. Les franges d'interférence résultant de la superposition de ces deux faisceaux de même longueur d'onde sont enregistrés dans le milieu 1. Ce milieu, à titre d'exemple non limitatif, est constitué d'un matériau photoéfractif polarisé par un champ électrique obtenu au moyen d'une source de tension $V_o$. Son orientation est telle que le champ électrique produit un effet de variation d'indice par des porteurs de charge crées par photoexcitation. Les variations spatiales d'intensité lumineuse se traduisent instantanément dans ce milieu par des variations spatiales d'indice de réfraction, les plans d'interférence étant, de préférence, quasi perpendiculaires à la direction du champ appliqué.

Il y a donc création d'un réseau de strates de vecteur d'onde spatial $\vec{K} : |\vec{K}| = \frac{2\pi}{\Lambda}$ avec $\Lambda$ égal au pas des strates photoinduites. Il est connu que les trois vecteurs ainsi définis sont liés par la relation vectorielle: $K = K_r - K_o$ ce qui est illustré à la figure 1. Lors de la lecture par le faisceau de lecture de vecteur d'onde $K_l$, pour obtenir un rendement optimum de la diffraction, il convient de respecter la condition de Bragg qui définit, pour chaque système d'interférence, l'angle $\Theta$ entre ce faisceau parallèle de lecture et les plans de diffraction. On obtient alors une onde diffractée de vecteur d'onde $K_d$. Comme cela est illustré à la figure 2, ces différents vecteurs sont liés entre eux par la relation: $K_d = K_l - K$.

Ces relations vectorielles permettent de calculer l'incidence Bragg du faisceau de lecture si la longueur d'onde de celui ci $\lambda'$ est différente de celle utilisée pour l'inscription du réseau $\lambda$. On a: $\sin \Theta = \frac{\lambda}{2\Lambda}$, $\Theta$ étant l'angle adéquat à la longueur d'onde $\lambda$ et $\Lambda$ le pas des strates photoinduites, on a de même $\sin \Theta' = \frac{\lambda'}{2\Lambda}$.

Comme sur la figure 3 si l'onde objet utilisée est complexe, elle contient un ensemble de vecteurs d'ondes ici $K_{o1}$ et $K_{o2}$, il en résulte dans le milieu photosensible 1 un spectre de vecteurs d'onde résultant $K_i$ de longueur et d'orientation différentes; ici $K_1$ et $K_2$ tels que $K_1 = K_r - K_{o1}$ et $K_2 = K_r - K_{o2}$. Ainsi, dans le cas où l'onde de lecture et l'onde de référence n'ont pas des vecteurs d'onde tels que $K_l = K_r$, on ne pourra pas diffracter une image dans les conditions optima si la longueur d'onde de lecture est différente de celle utilisée par l'inscription holographique dans ce milieu épais. En effet dans ce cas on a $\Theta' \neq \Theta$ avec

$\sin \Theta' = \frac{\lambda'}{\lambda} \sin \Theta$.

Le procédé selon l'invention assure une relecture, dans les conditions de Bragg par une onde de lecture de longueur d'onde $\lambda_l$ différente de la longueur d'onde du faisceau référence, prise en dehors du domaine de sensibilité spectrale des cristaux BSO par exemple.

Cette relecture est possible en volume, car on adopte, lors de deux enregistrements successifs, les mêmes conditions d'éclairement de l'objet, afin que les rayonnements qui interférent dans le milieu donnent aux strates des orientations identiques mais des espacements qui varient en fonction des longueurs d'ondes utilisées.

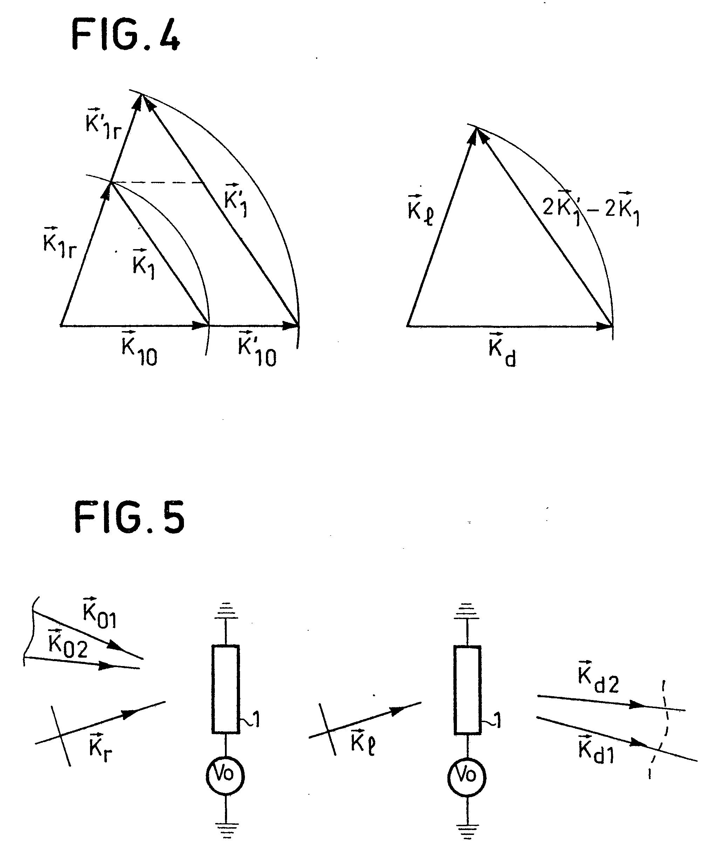

Ceci dit, le procédé de l'invention est basé sur les non-linéarités induites par la diffraction d'une structure de phase enregistrée à deux longueurs d'onde $\lambda_1$ et $\lambda'_1$; comme illustré à la figure 4, si l'on considère un front d'onde plan objet à ces deux longueurs d'ondes correspondent deux vecteurs d'onde $K_{10}$ et $K'_{10}$ colinéaires il en est de même des vecteurs d'ondes références $K_{1r}$ et $K'_{1r}$. Ainsi les vecteurs résultants $K_1$ et $K'_1$ sont homothétiques l'un de l'autre, ces deux vecteurs d'onde représentatifs des réseaux de strates sont donc parallèles: $K'_1 = kK_1$.

Si l'on considère une intensité lumineuse $I_1$ à l'enregistrement, elle peut être décomposée en une composante moyenne d'amplitude $I_o$ et une composante sinusoïdale d'amplitude $I_{m1}$. Si $\vec{r}$ est le vecteur position unité de l'origine, à n'importe quel point du milieu on a: $\vec{r} = ix + jy + kz$ (i, j, k étant les vecteurs unités dirigés suivant les axes x, y, z), on a $I_1 = I_o + I_{m1} \cos(K_1 \cdot \vec{r} + \Delta)$. On peut considérer $I_o = I_{m1}$, et la constante arbitraire de phase $\Delta = o$.

Ainsi $I_1 = I_o + I_o \cos(\vec{K_1} \cdot \vec{r})$.

Si l'on considère le vecteur i par exemple colinéaire $K_1$ on a: $K_1 \cdot \vec{r} = |K_1||i|$.

Ainsi $I_1 = I_o + I_o \cos|K_1||i|$.

Si l'on considère deux vecteurs parallèles $\vec{K_1}$ et $K'_1$ leurs intensités lumineuses respectives sont de la même forme et on a l'intensité résultante: $I = I_1 + I'_1 = 2I_o + I_o \cos|K_1||\vec{i}| + I_o \cos|K'_1||\vec{i}|$. La variation de l'indice de réfraction est linéairement proportionnelle à l'exposition, aussi l'indice de réfraction peut être exprimé sous une forme similaire à celle de l'intensité lumineuse.

Mais les matériaux considérés ne sont pas sensible à la composante continue, ils sont sensibles au gradient d'indice aussi:

$$\Delta n = \Delta no + \cos|\vec{K_1}||\vec{i}| + \cos|\vec{K'_1}||\vec{i}|.$$

La modulation en phase sur l'onde de lecture est fonction de l'illumination résultante, aussi on peut l'exprimer sous la forme:

$$a = Ae^{j\omega ot} e^{j\Delta \Phi o(\cos|\vec{K_1}||\vec{i}| + \cos|\vec{K_1}||\vec{i}|)}$$

avec $e^{j\Delta\Phi o \cos Kx} \sum_{n=-\infty}^{n=\infty} j^n J_n(\Delta\Phi o) e^{jnKx}$.

Cette décomposition en fonction de Bessel montre que si deux vecteurs d'onde $\vec{K}_1$ et $\vec{K}'_1$ sont enregistrés dans le milieu, on génère par interaction non linéaire à la lecture:

$$\vec{K}_1 \pm \vec{K}'_1$$
$$2\vec{K} \pm 2\vec{K}'_1$$
$$2\vec{K}'_1 \pm \vec{K}_1$$
$$2\vec{K}_1 \pm \vec{K}'_1 \dots$$

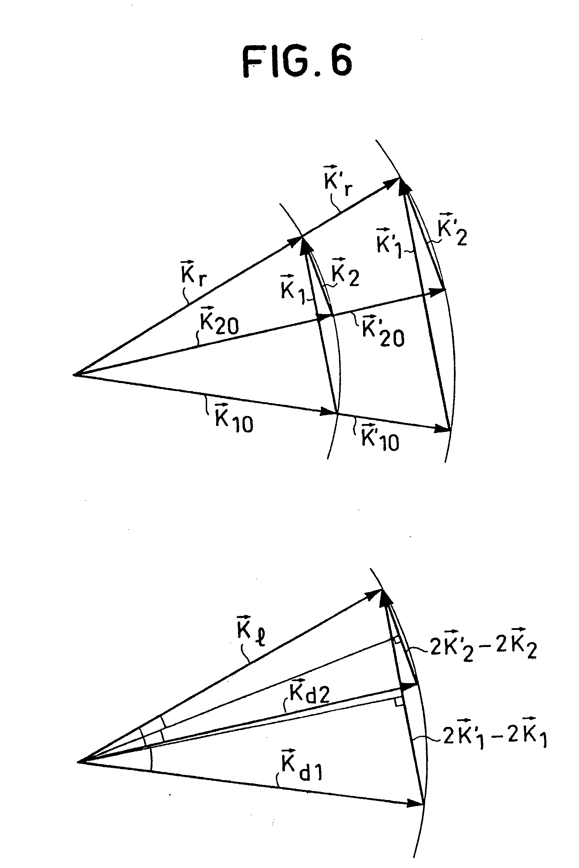

L'un ou l'autre de ces vecteurs d'onde permettra de diffracter dans le milieu avec les conditions de Bragg pour la longueur d'onde de lecture $\lambda_1$ telle que si on se place dans le cas du vecteur $K_{i1} = 2K'_1 = 2K_1$ qui est le cas considéré à la figure 6, on ait $= 2\pi\left(\dfrac{n_e}{\lambda_1}\right) = 2\pi\left(\dfrac{2n'_1}{\lambda'_1} - \dfrac{2n_1}{\lambda_1}\right)$ $n_i$ étant l'indice de milieu à la longueur d'onde i dans le vide, et la longueur d'onde dans le milieu étant $\dfrac{\lambda_i}{ni}$. Cette figure 6 illustre le procédé selon l'invention. L'enregistrement s'effectue en deux phases successives avec deux longueurs d'ondes distinctes: à une longueur d'onde $\lambda_1$ pour laquelle on a les vecteurs $K_r$, $K_{10}$ et $K_{20}$ dont les extrémités sont donc sur un cercle et à une autre longueur d'onde $\lambda'_1$; $K'_r$, $K'_{10}$ et $K'_{20}$. Les vecteurs résultant étant homothétiques, c'est à dire $K'_1 = kK_1$ et $K'_2 = kK_2$. De par la démonstration faite précédemment, il existe donc en plus des réseaux de strates élémentaires une série de configurations possibles de vecteurs résultants $K_{i1}$ et $K_{i2}$ correspondant à la combinaison des vecteurs $K_1$ et $K'_1$ et $K_2$ et $K'_2$ de la forme $aK_1 + bK'_1$, et $aK_2 + bK'_2$; a et b étant des nombres entiers positifs ou négatifs. Or chacun des vecteurs résultant $K_{i1}$ et $K_{i2}$ est homothétique des vecteurs $K_1$ et $K_2$, en effet $K_{i1} = aK_1 + bK'_1 = K_1(a + bk)$ et $K_{i2} = aK_2 + bK'_2 = K_2(a + bk)$.

Ces différents cas de figure sont aussi valables avec un nombre supérieur de vecteurs d'onde du faisceau d'onde complexe modulé par l'objet. On peut ainsi effectuer la lecture à l'incidence Bragg et ce dans une direction parallèle à la direction du faisceau référence du fait de ce rapport homothétique liant les vecteurs $K_{i1}$ et $K_1$, et $K_{i2}$ et $K_2$. Sur la figure 6 on a donc pris a = 2 et b = −2.

Les extrémités des vecteurs $K_l$: vecteur d'onde du faisceau de lecture, et $K_{d1}$ et $K_{d2}$: vecteurs d'onde des faisceaux de diffraction correspondant aux vecteurs d'onde $K_{o1}$ et $K_{o2}$ sont sur un même cercle du fait de l'incidence Bragg, $K_l$ étant parallèle à $K_r$.

La lecture s'effectue à une nouvelle longueur d'onde telle que défini précédemment.

Pour l'ensemble de la description qui précède et pour les figures annexées, on s'est placé à l'intérieur du milieu 1. Mais ces figures ainsi que les formules restent valable en dehors du milieu, à condition toutefois de considèrer un milieu dont l'indice varie peu pour les longueurs d'onde considérées, par exemple à $10^{-3}$ près. Ceci est vrai pour des matériaux à faible dispersion, ce qui est le cas de la gélatine. Pour des matériaux tel le BSO, on peut compenser la variation d'indice due à la dispersion par l'adjonction de deux lames passives transparentes 2 de variation d'indice opposée à celle du milieu 1 et enserrant celui-ci, pour compenser le chromatisme qui existe dans ce milieu. Ce qui peut être parfaitement réalisé par un réseau par exemple.

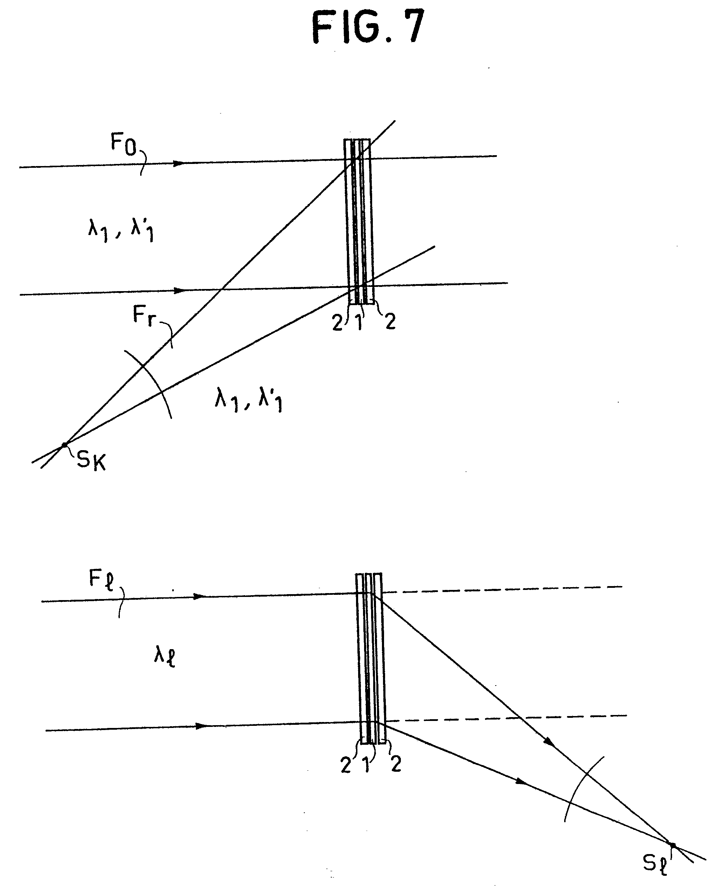

La figure 7 représente un exemple de fonctionnement avec les deux longueurs d'onde $\lambda_1$ et $\lambda'_1$.

Le schéma de composition des vecteurs d'ondes est maintenu quelle que soit l'orientation de l'un des vecteurs d'onde $K_1$ par exemple, une image complexe est donc diffractée dans son intégralité avec changement de longueur d'onde entre l'inscription et la lecture. En guise d'exemple, on peut considérer la lecture non destructive d'un hologramme de volume enregistré dans un cristal BSO.

On considère une longueur d'onde de lecture (laser semiconducteur) de 800 nm $< \lambda_i <$ 1000 nm; $n_i = 2,45$ et des longueurs d'onde d'inscription

$$\lambda_1 = 450 \text{ nm}; n_1 = 2,7$$
$$\lambda'_1 = 550 \text{ nm}; n'_1 = 2,6$$

Soit $\lambda_i = n_i\left(\dfrac{\lambda_1 \lambda'_1}{2(n_1\lambda'_1 - n'_1\lambda_2)}\right) = 962,5$ nm dans le cas considéré précédemment.

On a alors $\lambda_i = 962,5$ nm comme longueur d'onde de lecture.

En choisissant un couple de longueurs d'ondes d'inscription bleu-vert, on peut donc relire l'information de façon non destructive à l'aide d'un laser semiconducteur émettant dans l'infra-rouge. Les longueurs d'ondes d'enregistrement sont par exemple obtenus à partir d'un laser Krypton, He-Se, ou laser à colorant.

Ainsi ce dispositif proposé assure la diffraction d'une structure de phase épaisse pour une longueur d'onde de lecture quelconque visible ou infra-rouge.

Ainsi les applications de cette invention se situent dans le domaine des composants optiques holographiques enregistrés par variation d'indice sur des supports du type »gélatine«; l'invention présente également un grand intérêt pour la lecture non destructive (en dehors de la bande d'absorption) d'informations enregistrés par effet photoréfractif dans les cristaux BSO par exemple (enregistrement au voisinage de la bande d'absorption).

**Revendications**

1. Procédé holographique d'enregistrement-lecture par strates d'indice dans le volume d'un milieu de stockage (1) photoexcitable non-lineaire, faisant interférer dans ledit volume un faisceau issu d'un objet ($F_o$) et un faisceau de référence ($F_r$), de manière à entrainer l'apparition dans ledit milieu d'un réseau de strates auquel correspondent deux vecteurs d'onde d'inscription distincts la lecture dudit milieu étant assuré par une source produisant un rayonnement cohérent à une longueur d'onde de lecture ($\lambda_l$) differente de

la longueur d'onde des faisceaux d'inscription; et le vecteur d'onde dans ledit milieu étant une combinaison linéaire de ces vecteurs d'ondes d'inscription, caractérisé en ce que ledit procédé consiste à faire interférer, au cours de deux étapes d'inscription successives, les faisceaux de référence et objet de deux rayonnements inscripteurs de longueurs d'ondes d'inscription d'inscription distinctes ($\lambda_1$, $\lambda'_1$) produits par deux sources de rayonnement cohérent et projetés, au cours des deux étapes selon les mêmes trajets, en direction dudit objet et en direction dudit milieu (1).

2. Procédé selon la revendication 1, caractérisé en ce que la lecture du milieu de stockage photoexcitable n'est pas destructive.

3. Procédé selon la revendication 1, caractérisé en ce que le milieu de stockage (1) est un milieu à plage de photoexcitabilité extérieure à la longueur d'onde de lecture ($\lambda_l$).

4. Procédé suivant la revendication 3, caractérisé en ce que ce milieu est de la gélatine blanchie.

5. Procédé selon la revendication 2, caractérisé en ce que le milieu de stockage (1) est un milieu photoréfractif.

6. Procédé selon la revendication 5, caractérisé en ce que le milieu de stockage (1) est une lame d'oxyde de bismuth-silicium.

7. Procédé selon la revendication 6, caractérisé en ce que deux lames passives transparentes (2) de variation spectrale d'indice opposée à celle de ce milieu de stockage enserrent ce milieu (1).

## Patentansprüche

1. Holographisches Verfahren zum Aufzeichnen/Lesen über Brechungsindex-Schichtungen im Volumen eines nichtlinearen, durch Licht anregbaren Speichermediums (1), wobei in dem genannten Volumen ein von einem Objekt ($F_o$) ausgehendes Bündel mit einem Referenzbündel ($F_r$) zur Interferenz gebracht wird, so daß in dem genannten Medium ein Schichtungsmuster in Erscheinung tritt, dem zwei verschiedene Aufzeichnungswellen-Vektoren entsprechen, wobei das Auslesen aus dem Medium durch eine Quelle erfolgt, die eine kohärente Strahlung mit einer Lesewellenlänge $\lambda_1$ erzeugt, welche verschieden von der Wellenlänge der Einschreibbündel ist, und wobei der Wellenvektor in dem genannten Medium eine lineare Kombination dieser Einschreibwellen-Vektoren ist, dadurch gekennzeichnet, daß das genannte Verfahren darin besteht, daß im Verlauf von zwei aufeinanderfolgenden Aufzeichnungsschritten Interferenz erzeugt wird zwischen dem Referenzbündel und dem Objektbündel von zwei Aufzeichnungsstrahlungen verschiedener Aufzeichnungswellenlängen ($\lambda_1$, $\lambda'_1$), welche durch zwei Kohärent-Strahlungsquellen erzeugt und im Verlauf der zwei Schritte entlang denselben Wegen in der Richtung des Objektes und der Richtung des genannten Mediums (1) projiziert werden.

2. Verfahren nach Anspruch 1, dadurch gekennzeichnet, daß das Auslesen aus dem durch Licht anregbaren Speichermedium nicht destruktiv ist.

3. Verfahren nach Anspruch 1, dadurch gekennzeichnet, daß das Speichermedium (1) ein Medium ist, dessen Lichtanregungsbereich außerhalb der Lesewellenlänge ($\lambda_1$) liegt.

4. Verfahren nach Anspruch 3, dadurch gekennzeichnet, daß das Medium gebleichte Gelatine ist.

5. Verfahren nach Anspruch 2, dadurch gekennzeichnt, daß das Speichermedium (1) ein lichtbrechendes Medium ist.

6. Verfahren nach Anspruch 5, dadurch gekennzeichnet, daß das Speichermedium (1) eine Platte aus Wismuth-Silizium-Oxid ist.

7. Verfahren nach Anspruch 6, dadurch gekennzeichnet, daß zwei passive lichtdurchlässige Scheiben (2), deren spektrale Brechungsindexänderung entgegengesetzt zu der des Speichermediums ist, dieses Medium (1) einfassen.

## Claims

1. Holographic method of recording-reading by means of index stratification within the volume of a nonlinear photo-excitable storing medium (1), by producing interference within said volume of a beam issuing from an object ($F_o$) an a reference beam ($F_r$) in a manner to cause within said medium the appearance of a stratification pattern whereto two distinct recording wave vectors correspond, the reading of said medium being ensured by a source producing a coherent radiation at a reading wavelength ($\lambda_1$) different from the wavelength of the recording beams, and the wave vector in said medium being a linear combination of these recording waves vectors, characterized in that said method consists in producing interference, in the course of two successive recording steps, of the reference and object beams of two recording radiations of distinct recording wavelengths ($\lambda_1$, $\lambda'_1$) produced by two coherent radiation sources and projected in the course of the two steps along the same paths in the direction of said object and in the direction of said medium (1).

2. Method according to claim 1, characterized in that the reading of said photo-exitable storing medium is non-destructive.

3. Method according to claim 1, characterized in that the storing medium (1) is a medium having a range of photoexcitability exterior to the reading wavelength ($\lambda_1$).

4. Method according to claim 3, characterized in that the medium is bleached gelatine.

5. Method according to claim 2, characterized in that the storing medium (1) is a photofractive medium.

6. Method according to claim 5, characterized in that the storing medium (1) is a sheet of bismuth-silicon oxide.

7. Method according to claim 6, characterized in that the storing medium (1) is sandwiched between two passive transparent sheets (2) having a spectral index variation opposite to that of this medium.

FIG.1

FIG.2

FIG.3

7

# FIG.4

$\vec{K}'_{1r}$

$\vec{K}_{1r}$

$\vec{K}'_1$

$\vec{K}_1$

$\vec{K}_{10}$

$\vec{K}'_{10}$

$\vec{K}_\ell$

$2\vec{K}'_1 - 2\vec{K}_1$

$\vec{K}_d$

# FIG.5

$\vec{K}_{01}$

$\vec{K}_{02}$

$\vec{K}_r$

1

Vo

$\vec{K}_\ell$

1

Vo

$\vec{K}_{d2}$

$\vec{K}_{d1}$

# FIG.6

# FIG. 7

$F_0$

$\lambda_1, \lambda'_1$

$F_r$

$\lambda_1, \lambda'_1$

$S_K$

2' 1 2

$F_\ell$

$\lambda_\ell$

2' 1 2

$S_\ell$